Europäisches Patentamt

European Patent Office

Office européen des brevets

(11) Veröffentlichungsnummer: **0 222 917 B1**

(12) **EUROPÄISCHE PATENTSCHRIFT**
veröffentlicht nach Art. 158 Abs. 3
EPÜ

(45) Veröffentlichungstag der Patentschrift: 10.07.91

(51) Int. Cl.⁵: **B23Q 3/15**

(21) Anmeldenummer: 86902574.2

(22) Anmeldetag: 21.01.86

(86) Internationale Anmeldenummer:
PCT/SU86/00002

(87) Internationale Veröffentlichungsnummer:
WO 86/05429 (25.09.86 86/21)

(54) **ANORDNUNG ZUR MAGNETISCHEN FIXIERUNG VON TEILEN.**

(30) Priorität: 11.03.85 SU 3881203
30.04.85 SU 3864546

(43) Veröffentlichungstag der Anmeldung:
27.05.87 Patentblatt 87/22

(45) Bekanntmachung des Hinweises auf die
Patenterteilung:
10.07.91 Patentblatt 91/28

(84) Benannte Vertragsstaaten:
DE FR GB IT NL

(56) Entgegenhaltungen:
DE-A- 1 613 034
FR-A- 1 576 725
GB-A- 1 112 297

B.M. Malkin "Magnitnye prisposobleniya k
metallorezhuschim stankam", 1965, Mashinostroenie (Moscow, Leningrad), see pages
28-31)

(73) Patentinhaber: LENINGRADSKY GOSUDARST-
VENNY PEDAGOGICHESKY INSTITUT IMENI
A.I. GERTSENA
nab. reki Moiki
48 Leningrad, 191186(SU)

(72) Erfinder: CHERNIKOV, Jury Lvovich
pr. Energetikov, 28/6-70
Leningrad, 195248(SU)
Erfinder: PATYKIVSKY, Bogdan Iosifovich
ul. Sovetskaya, 70-79
Drogobych, 293720(SU)

(74) Vertreter: Patentanwälte Beetz sen. - Beetz
jun. Timpe - Siegfried - Schmitt-Fumian
Steinsdorfstrasse 10
W-8000 München 22(DE)

O. Ya. Konstantinov "Magnitnaya tekhnologicheskaya osnastka", 1974, Mashinostroenie
(Leningrad), see pages 142-143)

O. Ya. Konstantinov "Rasschet i konstruirovanie magnitnykh prisposobleny", 1967,
Mashinostroenie (Leningrad), pages 52-55

"Elektromagnitnye plity dlja metalloreschuschtyschych stankow" Obsor. Ser. S-I,
stankostroenie, NIIHASCH, 1975, S. 39-41, ris
22g

## Beschreibung

### Andwendungsgebiet

Die vorliegende Erfindung bezieht sich auf magnetische technologische Ausrüstungen von Werkzeugmaschinen und betrifft insbesondere eine Vorrichtung zur magnetischen Befestigung von Werkstücken.

### Vorheriger Stand der Technik

Es ist eine Vorrichtung zur magnetischen Befestigung von Werkstücken bekannt, die eine Magnetfelderregereinheit in Form von mindestens einem auf einer Grundplatte angeordneten und von einer Gleichstromspule umfaßten Kern und eine einstückig ausgeführte, mit Nateu versehene und mit dem Kern in Berührung stehende Platte aus einem ferromagnetischen Material zur Aufnahme von Werkstücken enthält (s. "Elektromagnitnye plity dlja metalloreschuschtyschych stankow." Obsor. Ser. S-I, Stankostroenie. (Magnetplatten für Zerspanungsmaschinen) M.: NIIMASCH, 1975, S. 39-41, ris. 22g).

Die Platte dieser Vorrichtung ist in Form einer Platte aus magnetischem Material mit äußeren Blindnuten hergestellt. Die Werkstücke werden nur an der Oberfläche befestigt, wenn das Material der Platte magnetisch gesättigt ist. Durch die Notwendigkeit einer magnetischen Sättigung sowie durch das Vorhandensein von Nuten ergibt sich ein sprunghafter Anstieg des magnetischen Widerstandes der Platte in einer Richtung, die zur Festigkeit der Werkstücksbefestigung parallel ist. Bei einem bestimmten Sättigungsgrad wird der magnetische Widerstand des Magnetstromweges durch das Werktück geringer als der Widerstand des Magnetstromweges in der Platte selbst. Daraus resultiert die Ablenkung des Magnetstroms aus der Platte in das Werkstück und die Befestigung des Werkstücks.

Es ist allerdings verständlich, daß das Befestigungsprinzip der Werkstücke selbst, das auf der Nutzung der magnetischen Sättigung einer zusammenhängenden Platte beruht, d. h. darauf; daß durch diese Platte ein sehr hoher Magnetstrom geschickt wird, nur mit großen Schwierigkeiten realisiert werden kann, wenn die Platte große Maße aufweist. Deshalb muß der Magnetkreis der Vorrichtung in parallele Abschnitte eingeteilt werden. Ihre Länge wird durch den Abstand zwischen den Polen bestimmt, d. h. durch den Abstand zwischen den Achsen der Kerne der Erregereinheit, die von den Spulen umfaßt werden und mit der Platte in Berührung stehen. Die Notwendigkeit der Kerne wird auch durch die Forderung nach Zwischenstützen für die Platte bestimmt, ohne die ihre Steifigkeit nicht ausreichen würde. Außerdem dürfen die Abstände zwischen den Polen nicht sehr groß sein, damit sich das Magnetfeld nicht hoch über der Platte erstreckt und zu einer Magnetisierung des Werkzeugs der Maschine führt. Bei der Anordnung der Polkerne in der Platte treten unter den Kernen Abschnitte mit einem schwächeren Feld auf, wodurch die Anziehungskraft hinsichtlich der Werkstücke stark abfällt. In Anbetracht der Tatsache, daß die Kerne wegen der vorhandenen Spulen wesentlich kürzer sind als die Platte, sind das Querschnittmaß und die Kontaktfläche mit der Platte von sehr großer Bedeutung. Für den Übergang des Magnetstroms von vier Seiten aus der Platte in den Kern muß er praktisch 3 - 4 mal so dick sein wie die Platte. Das führt dazu, daß die Breite der "toten Zonen", d.h. jener Abschnitte der Platte, auf denen das Werkstück nicht angeordnet werden darf, groß ist. Diese Zonen liegen auf der Platte längs der Längsachse der Kerne. Weil im oberen Teil der Platte Blindnuten vorhanden sind, ist die Breite der "toten Zonen" kleiner als das Querschnittsmaß der Kerne, allerdings mit ihm kommensurabel. Andererseits hat das Vorhandensein von äußeren Nuten in der oberen Platte verschlechterte Betriebsbedingungen und eine verminderte allgemeine Festigkeit des Systems zur Folge.

### Offenbarung der Erfindung

Der Erfindung liegt die Aufgabe zugrunde, eine solche Vorrichtung zur magnetischen Befestigung von Werkstücken mit einer aus einem ferromagnetischen Material ungeteilt ausgeführten Platte zu schaffen, bei der die konstruktive Ausbildung der Magnetfelderregereinheit es gestattet, die Fläche der Plattenabschnitte, auf welchen die Befestigung von Werkstücken unmöglich ist, und der Zonen mit geschwächter Wirkung des Magnetfeldes der Platte auf ein Mindestmaß zu reduzieren.

Die gestellte Aufgabe wird alternativ durch eine Vorrichtung gemäß Patentanspruch 1 oder 2 gelöst.

Die gemäß der vorliegenden Erfindung ausgeführte Vorrichtung sichert eine gleichmäßige Befestigung der Werkstücke in einem weiten Maßbereich derselben auf der gesamten Arbeitsfläche der Platte. Sie zeichnet sich durch hohe Betriebszuverlässigkeit, lange Lebensdauer und verhätnismäßig niedrige Betriebskosten aus.

### Kurzbeschreibung der Zeichnungen

Nachstehend werden konkrete Ausführungsbeispiele der vorliegendes Erfindung unter Bezugnahme auf die beiliegenden Zeichnungen angeführt. Es zeigen:

Fig.1 - ein Fragment der erfindungsgemäßen Vorrichtung zur magnetischen Befestigung von Werkstücken, axonometrische Darstellung mit Längeschnitt;

Fig.2 - die Baugruppe Kern-Platte mit einer zusätzlichen Magnetfelderregereinheit;

Fig.3 - eine der Ausführungsformen der Einrichtung zur magnetischen Befestigung von Werkstücken, Längsschnitt;

Fig.4 - eine weitere Ausführungsform der Vorrichtung zur magnetischen Befestigung von Werkstücken, Längsschnitt;

Fig.5 - einen Abschnitt der Platte zur Aufnahme der Werkstücke und Schema deren Befestigung;

Fig.6 - die Magnetisierungskurve für Stahl und eine Abhängigkeit der magnetischen Permeabilität von der Feldstärke;

Beste Ausführungsform der Erfindung

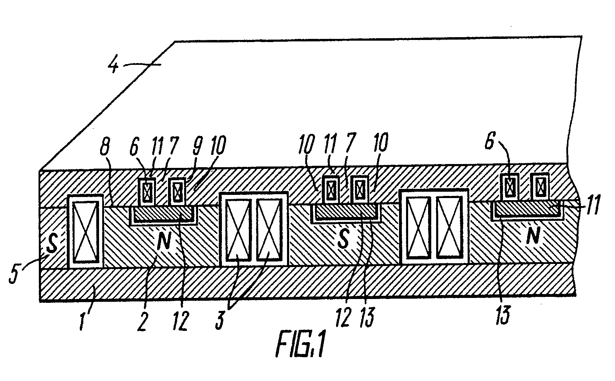

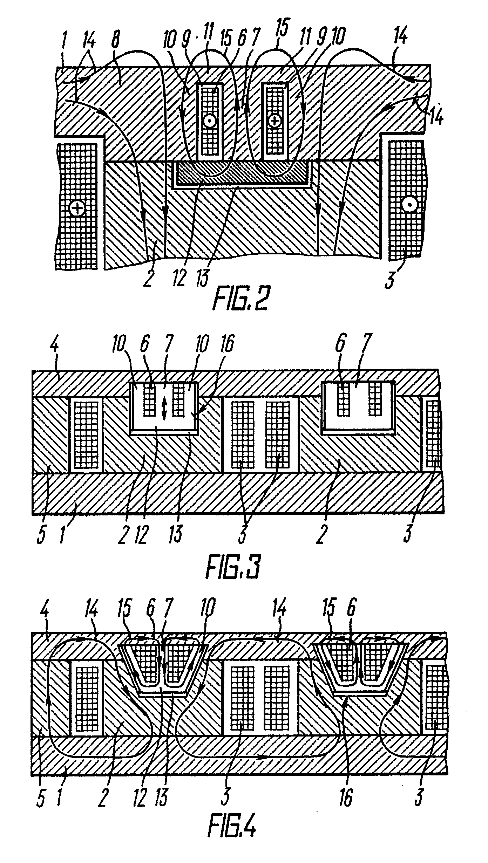

Die erfindungsgemäße Vorrichtung zur Befestigung von Werkstücken enthält eine Magnetfelderregereinheit, bestehend aus einer Grundplatte 1 (Fig.1), auf der durch Gleichstromspulen 3 umfaßte Kerne 2 angeordnet sind. Auf den Kernen 2 ist eine Platte 4 zur Aufnahme der Werkstücke, die ganz aus einem ferromagnetischen Material ausgeführt ist angeordnet. Die Grundplatte 1, die Kerne 2 und die äußeren Seitenwände 5 der Vorrichtung bestehen auch aus ferromagnetischem Material. In der Berührungszone der Platte 4 mit jedem Kern 2 sind symmetrisch zuseiner Längsachse III-förmige Magnetleiter mit auf deren mittleren Schenkeln 7 angeordneten Spulen 6 untergebracht. Der eine Teil jedes Magnetleiters ist in dem Körper der Platte 4 und der andere Teil desselben in dem Körper des Kerns 2 untergebracht. Zusammen bilden die III-förmigen Magnetleiter eine zusätzliche Magnetfelderregereinheit. Die Ausführung der III-förmigen Magnetleiter kann verschieden sein. Fig. 1,2 veranschaulichen eine Ausführungsform der Magnetleiter, bei der die Abschnitte der Platte 4 Bestandteile derselben sind. Dazu sind in den mit den Kernen 2 in Berührung stehenden Vorsprüngen 8 der Platte 4 Nuten 9 ausgeführt, in welchen die Spulen 6 untergebracht sind, hierbei sind die mittleren Schenkel 7 der Magnetleiter durch die zwischen den Nuten 9 liegenden Zähne der Platte 4 gebildet, während als äußere Schenkel 10 die an den Nuten 9 anliegenden Abschnitte der Platte 4 dienen. Hierbei haben die über den Spulen 6 liegenden Abschnitte 11 der Platte 4 eine wesentlich geringere Dicke als die über den Spulen 3 der Hauptmagnetfelderregereinheit liegenden Abschnitte der Platte 4. Den Schlussteil 12 de III-förmigen Magnetleiters bildet dabei eine in dem Kern 2 untergebrachte und von diesem mittels nichtmagnetischer Beilagen 13 magnetisch isolierte Einlege.

In Fig.2 sind durch die Linien 14 die von den Spulen 3 der Hauptmagnetfelderregereinheit erregten Magnetflüsse und durch die Linien 15 die von den Spulen 6 der Zusatzerregereinheit erregten Magnetflüsse gezeigt.

Der Magnetleiter kann auch als separates in der Vertikalebene verschiebbar angeordnetes Element 16 (Fig.3) ausgeführt sein, wie dies durch Pfeile an dem mittleren Schenkel 7 des Magnetleiters gezeigt ist. Die Dämpfung möglicher Stöße bei Verschiebungen des Elementes 16 wird durch Benutzung einer elastischen (verformbaren) nichtmagnetischen Beilage 13 gesichert.

In Fig.4 ist eine weitere Ausführungsform der Vorrichtung gezeigt, bei der das Element 16 die Form eines Trapeze, das mit der kleineren Grundfläche nach unten gerichtet ist, hat.

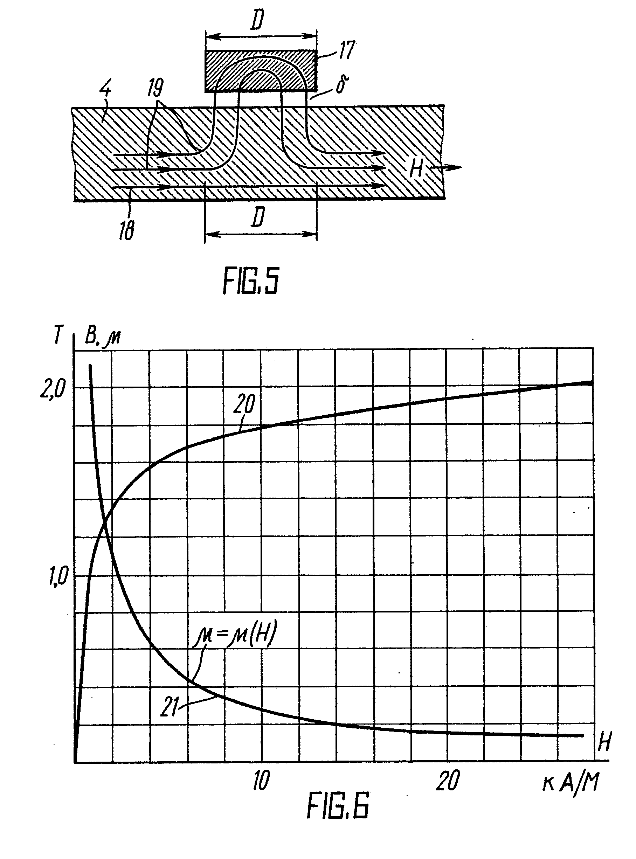

Bei der Befestigung eines Werkstücke 17 (Fig.5) mit einem Durchmesser D auf einem Abschnitt der Platte 4 wird durch die Linie 18 ein Teil des über die Platte 4 gehenden Magnetflusses und durch die Linien 19 ein Teil des Magnetflusses, der sich in das Werkstück 17 über den nichtmagnetischen Spalt bei einer Stärke H des Magnetfeldes in der Platte 4 abzweigt, dargestellt.

In Fig.6 ist die Kurve 20 der Abhängigkeit der Magnetinduktion von der Stärke H des Magnetfeldes in der aus Stahl hergestellten Platte 4 gezeigt, während die Kurve 21 die Abhängigkeit der magnetischen Permeabilität von der Stärke H des Magnetfeldes wiedergibt.

Die erfindungsgemäße Vorrichtung zur magnetischen Befestigung von Werkstücken 17 bei der Bearbeitung auf einer Werkzeugmaschine funktioniert folgendermaßen.

Das zu bearbeitende Werkstück (Fig.5) ordnet man auf der Platte 4 an und schließt die aus den Spulen 3 und 6 bestehende Wicklung (Fig.1) der Vorrichtung an eine Gleichstromquelle (nicht mitgezeichnet) an. Die Spulen 3 sind untereinander derart verbunden, daß nach deren Einschaltung ein Wechsel der Polaritäten N und S der Kerne 2 stattfindet. Die Spulen 6 können gegenüber den Spulen 3 entgegen oder gleichsinnig - je nach Bauart des Magnetleiters - geschaltet sein. Sind die äußeren Schenkel 10 des E-förmigen Magnetleiters Abschnitte der Platte 4, so ist es zweckmäßig, die Spulen 3 und 6 entgegen zu schalten, wie dies in Fig.2 durch Kreuze und Punkte, die die Stromrichtung in den Spulen 3 und 6 andeuten, gezeigt ist. In diesem Falle werden die von den Spulen 6 und 3 erregten Magnetflüsse 14 und 15 (Fig.2) bei dem Übergang aus der Platte 4 in den Kern 2 summiert und rufen keine Entmagnetisierungswirkung hervor. Bei Ausbildung des Magnetleiters als separates Element 16 (Fig.4), wo eine magnetische Isolierung von dem Kern 2 nicht nur des Schlußteils 12 des Magnetleiters, sondern auch seiner äußeren Schenkel 10 gesichert wird, kann die Schaltung der Spulen 3 und 6 beliebig sein, jedoch ist die gleichsinnige Schaltung zu bevorzugen. Die Verteilung der Magnetflüsse 14 und 15 für die gleichsinnige Schaltung der Spulen 3 und 6 ist in Fig.4 gezeigt. Die Bevorzugung der gleichsinnigen Schaltung der Spulen 3 und 6 ist darauf zurückzuführen, daß in diesem Falle die Magnetflüsse der Spulen 3 und 6, die sich in der Platte 4 schließen, auch in den Stirnzonen der Kerne 2 summiert werden.

Bei dem Anschluß der Wicklung der Vorrichtung an die Gleichstromquelle und bei der Erregung der Magnetflüsse 14 und 15 geht das Material der Platte 4 in den Zustand der magnetischen Sättigung über, wenn die Stärke H des Magnetfeldes in der Platte 4 hinreichend groß ist. Vom Standpunkt der Einsparung von Kupfer für die Herstellung der Wicklung aus ist ein solches Verhältnis der Masse des Magnetkreises der Vorrichtung zweckmäßig, bei dem der magnetische Widerstand sämtlicher Abschnitte des Magnetkreises längs der Linien der Magnetflüsse 14 und 15 klein ist, mit Ausnahme der Abschnitte des Magnetflußweges über die Platte 4. Dann ist ein größerer Teil der magnetischen Spannung der Spulen 3 und 6 an die Platte 4 angelegt, die in dieser eine hohe Magnetfeldstärke und eine magnetische Sättigung des Materials der Platte 4 hervorruft. Die Ausnutzung der Erscheinung der magnetischen Sättigung des Materials der Platte 4 erläutert Fig. 5, während in Fig.6 eine Abhängigkeit der magnetischen Induktion von der Stärke B des Magnetfeldes für Stahl sowie eine Abhängigkeit der magnetischen Permeabilität des Stahls von der Feldstärke H angeführt ist. Die angeführten Kurven veranschaulichen bekannte Eigenschaften ferromagnetischer Materialien, die sich in einer starken Senkung der magnetischen Permeabilität mit der Zunahme der Feldstärke H äußern. Der magnetische Widerstand der Platte 4 in Richtung der Magnetflußlinien 18 (Fig. 5) steigt hierbei stark an und wird bei einem bestimmten Wert der Feldstärke H mit dem magnetischen Widerstand gegen den durch das auf der Platte 4 angeordnete und von der Platte 4 durch einen kleinen technologischen nichtmagnetischen Abstand 8 getrennte Werkstück 8 gehenden Fluß 19 vergleichbar. Somit stellen der Abschnitt der Platte 4, dessen Länge dem Durchmesser D des Werkstücke 17 gleich ist, und der Weg des sich abzweigenden Teils des Magnetflusses parallele Abschnitte des Magnetkreises dar, bei welchen der Magnetfluß proportional der Differenz der magnetischen Potentiale $F = H \cdot D$ und umgekehrt proportional den magnetischen Widerständen der Abschnitte ist. Maßgebend dafür ist der Wert der Magnetfeldstärke H in der Platte 4, der unter Vernachlässigung des magnetischen Widerstandes der übrigen Abschnitte des Magnetkreises der Vorrichtung als Verhältnis der magnetischen Spannung der Spulen 3 und 6 zur Länge des Flußweges über die Platte 4 hinweg definiert wird. Aus den ausführlichen Berechnungen und experimentellen Untersuchungen ergibt sich, daß die magnetische Spannung der Spulen 3 und 6, die für eine magnetische Sättigung des Materials der Platte 4, welche eine Befestigung der Werkstücke 17 mit einer Kraft von ca. 50 bis 80 N/cm² (5...8 kp/cm²) sichert, erforderlich ist, bei einem solchen Kupferaufwand erreicht wird, der im Durchschnitt für die magnetischen Vorrichtungen bekannter Bauart kennzeichnend ist.

Das in Fig.5 gezeigte Schema für die Befestigung des Werkstücks 17 auf der Platte 4 entspricht jedem Abschnitt der Platte 4, wo der Magnetfluß seine Richtung nicht ändert und wo kein Übergang aus der Platte 4 in die Kerne 2 erfolgt. Dort, wo ein solcher Übergang stattfindet, müssen widersprechende Bedingungen eingehalten werden. Einerseits ist es erforderlich, daß in dem Kern 2 die magnetische Sättigung ausbleibt; nur in diesem Falle wird für den Durchlauf des Magnetflusses durch den Kern 2 ein geringer Teil der magnetischen Spannung der Spule 3 aufgewendet, was immer erwünscht ist. Andererseits erfordert dies eine Vergrößerung der Querschnittsfläche des Kerns 2, was auch die Fläche der "toten Zone" auf der Platte 4 vergrößert.

Die Einführung einer zusätzlichen Magnetfelderregereinheit gemäß der Erfindung, bestehend aus III-förmigen in der Berührungszone der Platte 4 mit dem Kern 2 angeordneten Magnetleitern, löst die Aufgabe der Beseitigung der "toten Zonen". Die von den Spulen 6 erregten Magnetflüsse 15 schließen sich über die Schenkel 7 und 10, wie dies in Fig.2, 4 gezeigt ist. Hierbei sättigen diese die Abschnitte 11 der Platte 4 und treten an die Aufnahmefläche der Platte 4 heraus, wo sie die in dieser Zone befindlichen Werkstücke 17 befestigen.

Die Entspannung der Werkstücke 17 und deren Abnahme von der Platte 4 erfolgt nach der Abschaltung der Wicklung der Vorrichtung von der Stromquelle.

Die vorstehend beschriebenen physikalischen Bedingungen für die Befestigung der Werkstücke 17 auf der ungeteilten Platte 4 der Vorrichtung gestatten es, die konstruktiven Merkmale, die den Gegenstand dieser Erfindung bilden, zu begründen. So ist, zum Beispiel, de Bedarf an magnetischer Isolation der Schlußteile 12 der III-förmigen Magnetleiter von dem Kern 2 durch die Forderung, den gegenseitigen Einfluß der von den Spulen 3 und 6 erregten Magnetflüsse 14 und 15 auszuschließen, bedingt. Beim Fehlen einer solchen Isolation würde der gegenseitige Einfluß der Magnetsysteme eine Entmagnetisierungswirkung auf die gesamte Vorrichtung ausüben.

Die Ausbildung der III-förmigen Magnetleiter als separates Element 16 (Fig.3) ist vorteilhaft gegenüber der Ausführung gemäß Fig.1. In diesem Falle kann man für die Magnetleiter ein Material mit besseren magnetischen Eigenschaften als das Material der Platte 4 benutzen. Dies gestattet, bei unveränderlichen Außenabmessungen der Magnetleiter auf deren mittleren Schenkeln 7 eine leistungsstärkere Spule 6 anzuordnen und deren auf die Beseitigung der "toten Zone" der Platte 4 über den Kernen 2 gezielte Wirkung zu verstärken.

Die Möglichkeit, die Magnetleiter um geringe Werte in der Vertikalebene zu verschieben, trägt auch zur Verstärkung der Wirkung der zusätzlichen Magnetfelderregereinheiten bei, weil hierbei ein minimaler magnetischer Spalt zwischen den Schenkeln 7 und 10 und der Platte 4 gesichert wird. Bei geringen Schiebungen wird dies durch Andrücken der Magnetleiter an die Platte 4 mit der magnetischen Kraft bei der Einschaltung der Vorrichtung erreicht. Wichtig ist, daß ein guter Kontakt zwischen den Magnetleitern und der Platte 4 dabei unabhängig von der genauen Einhaltung der Höhenmaße der Vertiefungen in der Platte 4 und den Kernen 2 zur Aufnahme der Magnetleiter erreicht wird. Dies vereinfacht deren Herstellungstechnologie.

Die Trapezform der Magnetleiter hat einen Vorteil gegenüber der Rechteckform hinsichtlich der Verminderung des magnetischen Widerstandes der Kerne 2 (Fig.4) und letzten Endes in Hinsicht auf den Kupferaufwand für die Herstellung der Wicklung.

Die Vorrichtung kann sowohl eine rechteckige als auch eine runde Form haben. Im letzteren Falle werden die Kerne 2, die III-förmigen Magnetleiter sowie die Spulen 3 und 6 ringförmig ausgeführt.

Die Vorteile der erfindungsgemäßen Vorrichtung zur Befestigung von Werkstücken 17 bestehen hauptsächlich in der Vermeidung der "toten Zonen" auf ihrer Arbeitsfläche und der Zonen mit abgeschwächter Anziehung der Werkstücke 17. Dies erweitert die technologische Anwendbarkeit der Vorrichtung und sichert eine gleichmäßige Befestigung einer reichhaltigen Nomenklatur von Werkstücken 17 auf dieser Vorrichtung.

Ein Versuchsmuster mit einer Größe von 200x630 mm wurde mit einer als Ganzes mit den Gehäusewänden gegossenen Gußeisenplatte 4 hergestellt. Die Kerne 2 und die Grundplatte 1 wurden aus Konstruktionsstahl, die III-förmigen Magnetleiter aus niedriggekohltem elektrotechnischem Stahl ausgeführt. Die durchgeführten Prüfungen zeigten, daß bei der Vorrichtung praktisch keine "toten Zonen" vorhanden sind und auf ihrer Platte 4 in jedem Punkt ihrer Oberfläche sich Werkstücke 17 mit einem Durchmesser von nicht unter 15 mm und einer Kraft von mindestens ca. 40 N/cm² (4 kp/cm²) festigen lassen.

Gewerbliche Anwendbarkeit

Die erfindungsgemäße Vorrichtung wird am zweckmäßigsten auf Schleifmaschinen benutzt. Es ist möglich, die Erfindung als Greifeinrichtung in Hebezeugen und in der Robotertechnik zu benutzen.

**Ansprüche**

1. Vorrichtung zur magnetischen Befestigung von Werkstücken, die eine Magnetfelderregereinheit in Form von mindestens einem auf einer Grundplatte (1) angeordneten und von einer Gleichstromspule (3) umfaßten Kern (2) und eine einstückig ausgeführte, mit Nuten versehene und mit den Kernen (2) in Berührung stehende Platte (4) aus einem ferromagnetischen Werkstoff zur Aufnahme von Werkstücken enthält,
   **dadurch gekennzeichnet,**

   daß zur Bildung einer zusätzlichen Magnetfelderregereinheit Magnetleiter vorgesehen sind, die jeweils in der Berührungszone der Platte (4) mit dem Kern (2) symmetrisch zur Vertikalmittelebene des Kernquerschnitts angeordnet sind,

   daß jeder Magnetleiter einen Querschnitt aufweist, der durch die an die Nuten eines auf der Innenseite der Platte (4) ausgeführten Nutenpaares (9) angrenzenden E-förmigen Abschnitte (7, 10, 11) der Platte (4) und durch eine ferromagnetische Einlage (12) gebildet wird, die in einer Ausnehmung im Kern (2) unter dem Nutenpaar (9) angeordnet und gegenüber dem Kern mittels Zwischenlagen (13) aus einem nichtmagnetischen Material isoliert ist, wobei auf dem mittleren Schenkel (7) jedes Magnetleiters eine Gleichstromspule angeordnet ist.

2. Vorrichtung zur magnetischen Befestigung von Werkstücken, die eine Magnetfelderregereinheit in Form von mindestens einem auf einer Grundplatte (1) angeordneten und von einer Gleichstromspule (3) umfaßten Kern (2) und eine einstückig ausgeführte, mit Nuten versehene und mit den Kernen (2) in Berührung stehende Platte (4) aus einem ferromagnetischen Werkstoff zur Aufnahme von Werkstücken enthält,
   **dadurch gekennzeichnet,**
   daß zur Bildung einer zusätzlichen Magnetfelderregereinheit Magnetleiter vorgesehen sind, die jeweils in der Berührungszone der Platte (4) mit dem Kern (2) symmetrisch zur Vertikalmittelebene des Kernquerschnitts angeordnet sind,

daß jeder Magnetleiter einen Querschnitt aufweist, der durch den über einer Ausnehmung auf der Innenseite der Platte (4) liegenden Plattenabschnitt und durch ein separates E-förmiges Element (16) gebildet wird, das in dem Raum, der durch die Ausnehmung der Platte und eine Nut im Kern (2) unter dieser Ausnehmung entsteht, in der Vertikalen verschiebbar angeordnet und gegenüber dem Kern mittels Zwischenlagen (13) aus einem nichtmagnetischen Material isoliert ist, wobei auf dem mittleren Schenkel (7) jedes E-förmigen Elements eine Gleichstromspule (6) angeordnet ist.

## Claims

1. Device for the magnetic fixing of workpieces, comprising a magnetic field exciter unit in the form of at least one core (2) mounted on a base plate (1) and surrounded by a DC coil (3) and comprising an integrally formed plate (4) made of a ferromagnetic material for receiving workpieces, which plate is provided with grooves and is in contact with the cores (2), characterised in that, in order to form an additional magnetic field exciter unit, magnetic conductors are provided, which are in each case mounted in the contact area of the plate (4) with the core (2), symmetrically to the vertical central plane of the core cross-section, and in that each magnetic conductor has a cross-section which is formed by the E-shaped sections (7, 10, 11) of the plate (4) adjacent to the grooves of a groove pair (9) formed on the inside of the plate (4) and by a ferromagnetic insert (12), which is mounted in a recess in the core (2) under the groove pair (9), and which is insulated from the core by means of intermediate layers (13) composed of a non-magnetic material, a DC coil being mounted on the middle arm (7) of each magnetic conductor.

2. Device for the magnetic fixing of workpieces, comprising a magnetic field exciter unit in the form of at least one core (2) mounted on a base plate (1) and surrounded by a DC coil (3), and comprising an integrally formed plate (4) made of a ferromagnetic material for receiving workpieces, which plate is provided with grooves and is in contact with the cores (2), characterised in that, in order to form an additional magnetic field exciter unit, magnetic conductors are provided, which are in each case mounted in the contact area of the plate (4) with the core (2), symmetrically to the vertical central plane of the core cross-section, and in that each magnetic conductor has a cross-section which is formed by the plate section lying over a recess on the inside of the plate (4) and by a separate E-shaped element (16), which is mounted so as to slide vertically in the space formed by the recess of the plate and a groove in the core (2) below said recess, and which is insulated from the core by means of intermediate layers (13) composed of a non-magnetic material, a DC coil (6) being mounted on the middle arm (7) of each E-shaped element.

## Revendications

1. Dispositif pour la fixation magnétique de pièces, qui comporte une unité de réglage du champ magnétique sous la forme d'au moins un noyau (2) agencé sur une plaque de base (1) et entouré de bobines (3) de courant continu et d'une plaque (4) réalisée en une pièce, pourvue de rainures et en contact avec les noyaux (2) en un matériau ferromagnétique pour la réception des pièces,
caractérisé en ce que
pour la formation d'une unité supplémentaire de réglage du champ magnétique, des conducteurs magnétiques sont prévus qui sont agencés dans la zone de contact de la plaque (4) avec le noyau (2),symétriquement par rapport au plan vertical médian de la section transversal du noyau,
en ce que chaque conducteur magnétique présente une section transversale qui est formée d'un tronçon en forme de E (7, 10, 11 ) de la plaque (4) adjacent aux rainures d'une paire de rainures (9) réalisée sur le côté interne de la plaque (4) et par une garniture ferromagnétique (12) qui est agencée dans un évidement dans le noyau (2) sous la paire de rainures (9) et qui est isolée vis-à-vis du noyau au moyen d'une pièce intermédiaire (13) en un matériau non magnétique, et sur la branche moyenne (7) de chaque conducteur magnétique est agencée une bobine à courant continu.

2. Dispositif pour la fixation magnétique de pièces, qui comporte une unité de réglage du champ magnétique sous la forme d'au moins un noyau (2) agencé sur une plaque de base (1) et entouré d'une bobine de courant continu (3) et d'une plaque (4) réalisée en une pièce, pourvue de rainures et se trouvant en contact avec le noyau (2) en un matériau ferromagnétique pour la réception de pièces,
caractérisé en ce que

pour la formation d'une unité supplémentaire de réglage du champ magnétique, des conducteurs magnétiques sont prévus qui sont agencés dans la zone de contact de la plaque (4) avec le noyau (2), symétriquement par rapport au plan vertical médian de la section transversale du noyau,

en ce que chaque conducteur magnétique présente une section transversale qui est formée par le tronçon de plaque se trouvant au-dessus d'un évidement du côté interne de la plaque (4) et par un élément séparé (16) en forme de E, qui est agencé dans l'espace résultant de l'évidement de la plaque et d'une rainure dans le noyau (2), sous cet évidement, en étant mobile verticalement et qui est isolé vis-à-vis du noyau au moyen d'intercalations (13) en un matériau non magnétique, et sur chaque branche moyenne (7) de chaque élément en forme de E est agencée une bobine de courant continu (6).

FIG.1

FIG.2

FIG.3

FIG.4

FIG.5

FIG.6